# EUROPÄISCHE PATENTSCHRIFT

(11) **EP 0 524 137 B1**
(45) Veröffentlichungstag und Bekanntmachung des Hinweises auf die Patenterteilung: **24.08.1994**
(21) Anmeldenummer: 92810460.3
(22) Anmeldetag: 15.06.1992
(51) Int. Cl.: F16B 13/06

(54) **Spreizdübel**
Expansible dowel
Cheville expansible

(30) Priorität: 18.07.1991 DE 4123802
(43) Veröffentlichungstag der Anmeldung: 20.01.1993
(73) Patentinhaber: HILTI Aktiengesellschaft, 9494 Schaan (LI)
(72) Erfinder: Winkeljann, Antonius, W-8910 Landsberg/Lech (DE); Mayr, Franz-Paul, W-8911 Hechenwang (DE)
(74) Vertreter: Wildi, Roland

(56) Entgegenhaltungen:
- EP-A- 0 226 524
- AT-B- 347 650
- AT-B- 350 243
- DE-A- 3 603 134

## Beschreibung

Die Erfindung betrifft einen Spreizdübel für Hinterschnittbohrungen zur Befestigung eines Bauteiles mit einem ein Lastangriffsteil aufweisenden Ankerbolzen, mit einer vom setzrichtungsseitigen Ende her wenigstens teilweise geschlitzten Spreizhülse, mit einer Führungshülse, deren Aussendurchmesser dem Aussendurchmesser der Spreizhülse entspricht sowie mit einem vom Ankerbolzen entgegen der Setzrichtung in die Spreizhülse hineinziehbaren Spreizkegel.

Ein aus der EP-A1-0226 524 bekannter Spreizdübel besteht aus einem Ankerbolzen, der auf der einen Seite einen Spreizkegel und auf der gegenüberliegenden Seite ein Lastangriffsteil in Form eines Aussengewindes aufweist, wobei das Aussengewinde der Aufnahme einer Mutter dient. Zwischen dem Spreizkegel und der Mutter sind zwei rohrförmige Hülsen angeordnet, deren Aussendurchmesser dem Durchmesser der Bohrung im Aufnahmewerkstoff entsprechen, in welche der Spreizdübel eingesetzt wird. Der kleinste Innendurchmesser dieser Hülsen ist geringfügig grösser als der Schaftdurchmesser des Ankerbolzens.

Die dem Spreizkegel am nächsten liegende Hülse, im weiteren Spreizhülse genannt, weist von der dem Spreizkegel zugewandten Stirnseite ausgehende, sich entgegen der Setzrichtung erstreckende Längsschlitze auf. Durch diese Längsschlitze werden einzelne Spreizsegmente gebildet, die sich mit Hilfe des Spreizkegels radial aufweiten lassen.

Die im rückwärtigen Bereich angeordnete Hülse, im weiteren Führungshülse genannt, dient der radialen Führung des Ankerbolzens in der Bohrung.

Während des Aufspreizvorganges kann das an der Oberfläche des Aufnahmewerkstoffes zu befestigende Bauteil an dem Aufnahmewerkstoff angeordnet sein, wobei die im Bauteil angeordnete Durchtrittsöffnung den gleichen bzw. geringfügig grösseren Durchmesser aufweist, wie die Bohrung im Aufnahmewerkstoff.

Mittels eines geeigneten Setzwerkzeuges und dem auf dem Ankerbolzen angeordneten Spreizkegel werden die Spreizsegmente der in der hinterschnittenen Bohrung sitzenden Spreizhülse radial aufgeweitet. Nach dem Aufweitvorgang wird das Setzwerkzeug entfernt und die Führungshülse über den Ankerbolzen in die Bohrung geschoben.

Die entgegen der Setzrichtung weisende Stirnfläche der Führungshülse kann dabei so tief in der Bohrung zu liegen kommen, dass die von dem an dem Aufnahmewerkstoff angeordneten Bauteil erzeugten Querkräfte nicht von der Führungshülse aufgenommen werden können.

Eine derart ausgebildete Führungshülse gewährleistet weder eine zuverlässige Zentrierung des Bauteiles an dem Aufnahmewerkstoff, noch eine zuverlässige Querlastaufnahme einer durch das Bauteil entstehenden Querlast. Somit ist auch die Sicherheit der Befestigung in Frage gestellt, da eine flächengleiche Ausrichtung der entgegen der Setzrichtung weisenden Stirnseite der Führungshülse mit der dem Aufnahmewerkstoff gegenüberliegenden Oberfläche des Bauteiles nicht gewährleistet ist.

Ragt die Führungshülse nicht in das am Aufnahmewerkstoff angeordnete Bauteil, so kann sich das Bauteil beim Auftreten einer hohen Querlast so weit in Lastangriffsrichtung verschieben, bis die Wandung der Durchtrittsöffnung des Bauteiles an dem Ankerbolzen anliegt, so dass der Ankerbolzen die gesamte Querlast aufnehmen muss. Die Überlagerung der konstanten, bei der Befestigung des Bauteils am Aufnahmewerkstoff entstehenden Axialkraft mit einer weiteren, senkrecht dazu wirkenden Abscherkraft kann zu einer Überbelastung und somit zu einem Bruch des Ankerbolzens führen.

Der Erfindung liegt somit die Aufgabe zugrunde, einen Spreizdübel zu schaffen, der eine sichere Befestigung in der Bohrung ermöglicht und dessen Führungshülse die Funktion der Zentrierung sowie der Querlastaufnahme eines an dem Aufnahmewerkstoff angeordneten Bauteiles sicher übernimmt.

Erfindungsgemäss wird die Aufgabe dadurch gelöst, dass die Führungshülse an dem der Setzrichtung abgewandten Ende eine zur Anlage am Bauteil bestimmte, den Aussendurchmesser der Führungshülse überragende Schulter aufweist.

Durch das Anliegen der Schulter wird eine Ausrichtung der Führungshülse gegenüber der Oberfläche des Bauteiles gewährleistet, so dass die Funktion der Zentrierung sowie der Querlastaufnahme sicher gewährleistet ist. Im gesetzten Zustand des Spreizdübels berühren sich die zueinander weisenden Stirnseiten der Führungshülse und der Spreizhülse nicht.

Zweckmässigerweise entspricht die Länge der Führungshülse dem 0,6- bis 2,5-fachen Aussendurchmessers der Führungshülse. Die Festigkeit des Aufnahmewerkstoffes kann unterschiedlich hart sein. Bei einem weichen Material ist vorteilhaft die durch das Bauteil in die Bohrung des Aufnahmewerkstoffes ragende Distanzhülse entsprechend lang ausgebildet, um die am Bauteil angreifende Querlast im Aufnahmewerkstoff aufnehmen zu können. Auf diese Weise wird die Querlast auf eine grössere Fläche verteilt.

Vorteilhafterweise beträgt die axiale Höhe der Schulter das 0,1- bis 0,6-fache des Aussendurchmessers der Führungshülse. Durch die Höhe der Schulter kann deren Festigkeit beeinflusst werden, so dass die Verwendung einer Beilagscheibe überflüssig wird. Bei Führungshülsen mit einem sehr grossen Aussendurchmesser entspricht die Höhe der Schulter dem 0,1-fachen des Aussendurchmessers der Führungshülse.

Im Gegensatz zu den häufig bekannten Schultern in Form von Nocken, Rippen, Zapfen oder Erhöhungen, ist die Schulter vorzugsweise als anlaufender Bund ausgebildet. Dies hat den Vorteil, dass eine gleichmässige Auflage an der Oberfläche des Bauteiles gewährleistet wird. Speziell dann, wenn die Schulter als Ersatz für Beilagscheiben dienen soll, ist die Schulter als umlaufender Bund ausgebildet.

Zweckmässigerweise beträgt der Aussendurchmesser des Bundes das 1,2 bis 2-fache des Aussendurchmessers der Führungshülse. Je nach der Art des zu befestigenden Bauteiles an dem Aufnahmewerkstoff kann der Aussendurchmesser des Bundes unterschiedlich gross ausgebildet sein. Bei der Befestigung eines Bauteiles, dessen Material ein hohes Gewicht aber eine geringe Druckfestigkeit aufweist, ist bevorzugt eine Führungshülse zu verwenden, deren Bund stark ausgebildet ist und einen grossen Aussendurchmesser aufweist.

Möchte man die der Mutter zugewandte Stirnfläche der Führungshülse flächengleich mit der Oberfläche des Bauteiles anordnen, so besteht die Möglichkeit, im Mündungsbereich der Bohrung des Bauteiles eine grosse Fase anzubringen, so dass der Bund der Führungshülse in dem durch die Fase entstandenen Freiraum versenkt werden kann. Der Bund der Führungshülse ist in einem solchen Falle zweckmässig dünn ausgebildet.

Zweckmässigerweise weist die Führungshülse über einen Teil ihrer Länge verteilt als Trennstellen wirkende Querschnittsschwächungen auf. Eine derartig ausgebildete Führungshülse kann auf die Stärke des jeweils zu befestigende Bauteiles abgestimmt werden, so dass sich die Distanzhülse und die Führungshülse stirnseitig nicht berühren. Die Trennstellen können aus umlaufenden Nuten bzw. aus in einer Ebene um den Umfang verteilt angeordneten Bohrungen bestehen. Je nach Art des Materials der Führungshülse kann der überflüssige Teil vom übrigen Teil der Führungshülse abgebrochen bzw. mittels eines Werkzeuges abgetrennt werden. Somit ist eine Führungshülse für mehrere Bauteildicken verwendbar.

Da die Führungshülse Querkräfte aufnehmen muss, ist darauf zu achten, dass im Bereich des Bauteiles und im Querlastaufnahmebereich keine Trennstellen angeordnet sind. Aus diesem Grunde sind solche Trennstellen mit Vorteil auf dem dem Bund gegenüberliegenden Teil der Führungshülse angeordnet.

Abgesehen von den Trennstellen können auch Markierungen oder Beschriftungen an der Führungshülse angebracht sein, die dem Anwender einen Hinweis darüber geben, wieviel er die Führungshülse bei einer entsprechenden Bauteildicke zu kürzen hat.

Die Erfindung wird anhand eines Ausführungsbeispieles näher erläutert. Es zeigen:
- Fig. 1 das Aufweiten einer Spreizhülse mittels eines Setzwerkzeuges;
- Fig. 2 einen erfindungsgemässen Spreizübel im gesetzten Zustand.

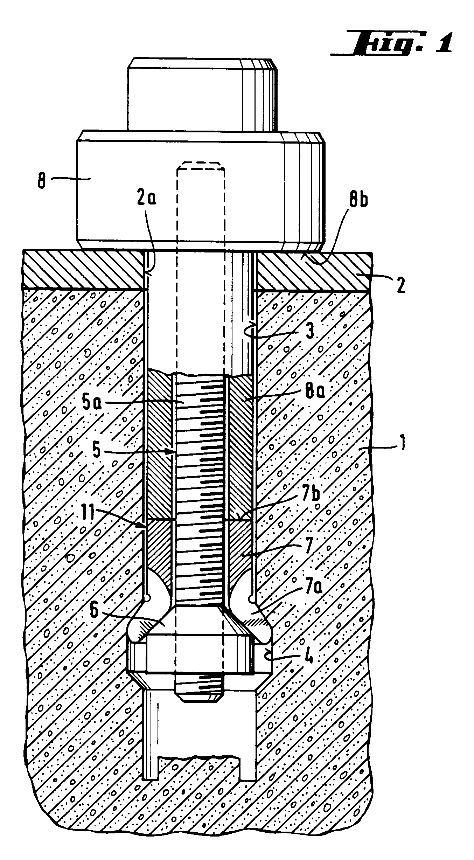

In Fig. 1 ist die Aufweitung einer Spreizhülse 7 eines Spreizdübels 11 mittels eines an sich bekannten und daher nicht näher beschriebenen Setzwerkzeuges 8 dargestellt. Zu Beginn wird die aufgeweitete Spreizhülse 7 zusammen mit einem Spreizkegel 6 und einem Ankerbolzen 5 mit dem Setzwerkzeug 8 in Verbindung gebracht. Dabei wird der Ankerbolzen 5 so weit in die Aufnahme des Setzwerkzeuges 8 gedreht, bis der Spreizkegel 6 an Spreizsegmenten 7a der Spreizhülse 7 und die gegenüberliegende Stirnseite 7b der Spreizhülse 7 an einem vom Setzwerkzeug 8 abragenden Hals 8a zur Anlage kommen. Durch die Abstimmung der Länge des Halses 8a auf die Tiefe des erstellten Hinterschnittes 4 in der Bohrung 3 wird die Positionierung der Spreizsegmente 7a im Bereich des Hinterschnitts 4 erreicht, wenn das Setzwerkzeug 8 in die Bohrung 3 eingesetzt wird. Liegt das Bauteil 2 während des Einsetzvorganges an dem Aufnahmewerkstoff 1 an, so muss die Stärke des Bauteiles 2 bei der Bestimmung der Länge des Halses 8a berücksichtigt werden.

Während des Aufweitvorganges liegt die Stirnseite 8b des Setzwerkzeuges 8 an dem Aufnahmewerkstoff 1 oder an dem Bauteil 2 an. Durch eine Axialverschiebung des Ankerbolzens 5 und des Spreizkegels 6 gegenüber der sich am Hals 8a des Setzwerkzeuges 8 abstützenden Spreizhülse 7 wird das Aufweiten der Spreizsegmente 7a erreicht. Dabei wird der Spreizkegel 6 im Bereich der Spreizsegmente 7a von dem Ankerbolzen 5 in die Spreizhülse 7 gezogen. Die Spreizsegmente 7a weiten sich auf und greifen in den Hinterschnitt 4 der Bohrung 3.

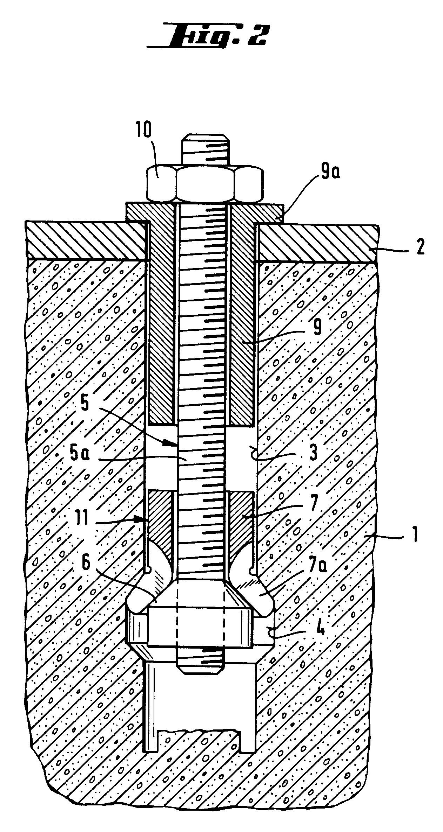

Nachdem die Festlegung erfolgt ist, wird das Setzwerkzeug 8 von dem Ankerbolzen 5 abgeschraubt, aus der Bohrung 3 und aus der Durchtrittsöffnung 2a eines Bauteiles 2 herausgezogen. Anschliessend wird eine einen Bund 9a aufweisende Führungshülse 9 über den Ankerbolzen 5 geschoben und durch die Durchtrittsöffnung 2a im Bauteil 2 in die Bohrung 3 im Aufnahmewerkstoff 1 geschoben. Die Festlegung des Bauteils 2 an dem Aufnahmewerkstoff 1 erfolgt mittels einer auf ein als Gewinde ausgebildetes Lastangriffsteil 5a des Ankerbolzens 5 aufgedrehten Mutter 10, die mit einem geeigneten Werkzeug so lange angezogen wird, bis die Festlegung erfolgt ist. Ein derartig gesetzter Spreizdübel 11 ist aus der Fig. 2 ersichtlich.

## Patentansprüche

1. Spreizdübel für Hinterschnittbohrungen zur Befestigung eines Bauteiles (2) mit einem ein Lastangriffsteil (5a) aufweisenden Ankerbolzen (5), mit einer vom setzrichtungsseitigen Ende her wenigstens teilweise geschlitzten Spreizhülse (7), mit einer Führungshülse (9), deren Aussendurchmesser dem Aussendurchmesser der Spreizhülse (7) entspricht sowie mit einem vom Ankerbolzen (5) entgegen der Setzrichtung in die Spreizhülse (7) hineinziehbaren Spreizkegel (6), **dadurch gekennzeichnet,** dass die Führungshülse (9) an dem der Setzrichtung abgewandten Ende eine zur Anlage am Bauteil (2) bestimmte, den Aussendurchmesser der Führungshülse (9) überragende Schulter aufweist.

2. Spreizdübel nach Anspruch 1, dadurch gekennzeichnet, dass die Länge der Führungshülse (9) das 0,6- bis 2,5-fachen des Aussendurchmessers der Führungshülse (9) beträgt.

3. Spreizdübel nach Anspruch 1 oder 2, dadurch gekennzeichnet, dass die axiale Höhe der Schulter das 0,1- bis 0,6-fache des Aussendurchmessers der Führungshülse (9) beträgt.

4. Spreizdübel nach einem der Ansprüche 1 bis 3, dadurch gekennzeichnet, dass die Schulter als umlaufender Bund (9a) ausgebildet ist.

5. Spreizdübel nach Anspruch 4, dadurch gekennzeichnet, dass der Aussendurchmesser des Bundes (9a) das 1,2 bis 2-fache des Aussendurchmessers der Führungshülse (9) beträgt.

6. Spreizdübel nach einem der Ansprüche 1 bis 5, dadurch gekennzeichnet, dass die Führungshülse (9) über einen Teil ihrer Länge verteilt als Trennstellen wirkende Querschnittschwächungen aufweist.

## Claims

1. Expansion dowel for undercut bores for fixing an assembly component (2), comprising an anchoring bolt (5) with a load engaging portion (5a), an expansion sleeve (7) which is at least partially slotted from the setting end, with a guide sleeve (9) the outside diameter of which correspond with that of the expansion sleeve (7), and with an expanding cone (6) which is pulled against the setting direction into the expansion sleeve (7) by the anchoring bolt (5), **characterised in that** the guide sleeve (9) comprises at the end oriented away from the setting direction a shoulder, which extends beyond the outside diameter of the guide sleeve (9) and is intended to abut the assembly component (2).

2. Expansion dowel according to claim 1, **characterised in that** the length of the guide sleeve (9) is between 0.6 and 2.5 times the outside diameter of the guide sleeve (9).

3. Expansion dowel according to claim 1 or 2, **characterised in that** the axial height of the shoulder is between 0.1 and 0.6 times the outside diameter of the guide sleeve (9).

4. Expansion dowel according to one of claims 1 to 3, **characterised in that** the shoulder is structured to be a peripheral collar (9a).

5. Expansion dowel according to claim 4, **characterised in that** the outside diameter of the collar (9a) is between 1.2 and 2 times the outside diameter of the guide sleeve (9).

6. Expansion dowel according to one of claims 1 to 5, **characterised in that** the guide sleeve (9) comprises cross-sectional weaknesses spaced over part of its length serving as separating points.

## Revendications

1. Cheville à expansion pour trous contre-dépouillés pour la fixation d'un élément de construction (2), comprenant un boulon d'ancrage (5) avec un élément d'application de charge (5a), une douille d'écartement (7) fendue au moins en partie à partir de l'extrémité côté direction de pose, une douille de guidage (9) dont le diamètre extérieur correspond au diamètre extérieur de la douille d'écartement (7), ainsi qu'un cône d'écartement (6) qui peut être tiré par le boulon d'ancrage (5), dans le sens opposé à la direction de pose, dans la douille d'écartement (7), caractérisée en ce que la douille de guidage (9) présente à l'extrémité opposée à la direction de pose un épaulement destiné à l'application contre l'élément de construction (2) et dépassant du diamètre extérieur de la douille de guidage (9).

2. Cheville à expansion selon la revendication 1, caractérisée en ce que la longueur de la douille de guidage (9) est égale à 0,6 à 2,5 fois le diamètre extérieur de la douille de guidage (9).

3. Cheville à expansion selon l'une des revendications 1 ou 2, caractérisée en ce que la hauteur axiale de l'épaulement est égale à 0,1 à 0,6 fois le diamètre extérieur de la douille de guidage (9).

4. Cheville à expansion selon l'une des revendications 1 à 3, caractérisée en ce que l'épaulement est conformé en collet circulaire (9a).

5. Cheville à expansion selon la revendication 4, caractérisée en ce que le diamètre extérieur du collet (9a) est égal à 1,2 à 2 fois le diamètre extérieur de la douille de guidage (9).

6. Cheville à expansion selon l'une des revendications 1 à 5, caractérisée en ce que la douille de guidage (9) présente, réparties sur sa longueur, des réductions de section qui agissent comme points de sectionnement.
